# EUROPEAN PATENT APPLICATION

(11) **EP 1 985 966 A1**
(43) Date of publication of application: **29.10.2008**
(21) Application number: 08004650.1
(22) Date of filing: 13.03.2008
(51) Int. Cl.: G01B 3/40, G01B 5/20, G01B 7/28, G01B 11/24

(54) **Apparatus and method for checking threaded elements**

(30) Priority: 23.03.2007 IT MI20070585
(71) Applicant: C.P.A. S.r.l., 25030 Uragao D'Oglio (BS) (IT)
(72) Inventor: Vigano, Cesare, 25032 Chiari BS (IT); Vigano, Stefano, 25032 Chiari BS (IT)
(74) Representative: Checcacci, Giorgio

(57) **Abstract**

An apparatus (100) for checking the thread of a threaded element comprises: a check group (1) adapted to receive a freely rotatable threaded element (200), the check group (1) comprising abutment means (2) and at least one check roller (3) rotatable about a rotation axis (X-X) and externally threaded with a reference thread (30), the abutment means (2) and the at least one check roller (3) being positionable relative to each other for defining an operative configuration of the check group (1), in which they are situated in lateral abutment with the threaded element (200); motor means adapted to cause a rotation between the threaded element (200) and the at least one check roller (3), and detection means (5) adapted to detect the relative position of the abutment means (2) and the at least one check roller (3). A method for checking threaded elements that can be carried out by means of such apparatus (100) is also described.

## Description

The present invention refers to an apparatus for checking threaded elements.

The invention also refers to a method for checking threaded elements that can be carried out by means of such apparatus.

Within the framework of the present description and following claims, the term "threaded element" is used to generically indicate any element having an external thread for at least one section of its length, for example a screw or a stud.

A threaded element can originally have thread defects, and when these defects are such to compromise the functionality of the thread, the threaded element must be rejected. Some defects, such as those connected to a wrong screw tilt angle, are typically originated in a thread formation step, while other defects, such as irregularity in the profile shape, can arise after the formation of the thread, for example due to impacts occurring during the manufacturing process or due to an imperfect material deposition during surface coating processes to which the threaded elements may be subjected.

Several systems are known for automatically checking the thread of threaded elements, for the purpose of identifying elements with defective thread.

In the so-called "go - no go" systems, the check is carried out by screwing a ring on a threaded section of the threaded element to be checked. These systems allow a complete check in the circumferential direction of the checked threaded section under check to be carried out and thus also circumferentially localised defects to be detected, but they are rather slow due to the time required for screwing and subsequently unscrewing the ring, that is proportional to the length of the threaded section to be checked. Moreover, possible fitting problems of the ring on the threaded element to be checked can determine the erroneous rejection of non-defective pieces.

In the jaw coupling systems, the check is carried out by coupling with the threaded element to be checked two or more jaws having a negative impression of the thread to be checked. By rotating the threaded element, it is possible to carry out a complete check in a circumferential direction.

Both in the "go - no go" systems and in the jaw coupling systems, a plurality of check apparatuses (rings in the first case, jaws in the second case) has to be provided that differ not only as to the pitch of the thread to check, but also, given the same thread pitch, as to the diameter of the threaded element. Moreover, in both cases, the check apparatus is subjected to considerable wear and requires frequent replacements.

In the optical systems, a vision device provides an image, for example by means of photography or laser scan, of a longitudinal profile of the threaded element to be checked; the image is then processed and compared with a reference profile by means of a suitable control system. In order to obtain images of several longitudinal profiles along the circumference, it is possible to increase the number of vision devices, but this involves a considerable increase of the complexity and overall dimensions of the check apparatus. Alternatively, it is possible to rotate the threaded element and obtain images of several profiles by a single vision device, negatively effecting however the processing times. In general, moreover, the optical systems are subjected to false interpretations due to the possible presence of extraneous particles on the threaded elements to check.

The need of the manufacturers of threaded elements to provide threaded element stocks with increasingly reduced defective rates, today typically on the order of parts per million, requires developing apparatuses and methods for checking threaded elements that are at the same time increasingly faster and more accurate, overcoming the drawbacks set forth above with reference to the known check systems.

The technical problem underlying the present invention is therefore to provide an apparatus and method for checking threaded elements which allow, in a simple and quick manner, checks to be carried out along the entire circumferential extension of a threaded section of such elements.

According to a first aspect thereof, the present invention therefore refers to an apparatus for checking the thread of a threaded element comprising:
- a check group adapted to receive a freely rotatable threaded element, said check group comprising abutment means and at least one check roller rotatable about a respective rotation axis and externally threaded with a reference thread, said abutment means and said at least one check roller being positionable relative to each other for defining an operative configuration of said check group, in which said abutment means and said at least one check roller are in lateral abutment with said threaded element;
- motor means adapted to cause a rotation between said threaded element and said at least one check roller, and
- detection means adapted to detect the relative position between said abutment means and said at least one check roller.

By means of the apparatus of the invention, the detection of thread defects of a threaded element is transformed into the detection of the relative position between a check roller and abutment means. If the thread does not have defects, in the operative configuration of the check group these elements will be situated in a correct and known relative position, typically function of the average diameter of the threaded element. If on the other contrary the thread has defects, the reference thread of the check roller cannot correctly engage the thread of the threaded element, so that the check roller and the abutment means are not found in the correct relative position, either when they came into lateral abutment with the threaded element or in any case during the check along its circumference, made by causing a rotation between the check roller and the threaded pin. The amount of the displacement with respect to the correct relative position provides also an indication of the size of the detected defect.

The apparatus of the invention advantageously allows checks of a threaded section along the entire circumference of the threaded element to be carried out in a simple manner and with high precision. Furthermore, the check times are extremely limited, since the check is carried out by means of a relative rotation between the check roller and the threaded element. The check speeds attainable with the apparatus of the invention allow employing the apparatus also in line with the threaded element production process, without this causing a production slow-down.

Moreover, the use of rollers as check tools provides the apparatus with high flexibility, since, given one thread pitch, it is possible to use the same roller for checking threaded elements with different diameter.

Preferred characteristics of the apparatus according to the invention are defined in the attached claims 2-19, whose content is herein fully incorporated by reference.

According to a second aspect thereof, the invention refers to a method for checking the thread of a threaded element comprising the steps of:
a) bringing abutment means and at least one check roller rotatable about a respective rotation axis and externally threaded with a reference thread into lateral abutment with a freely rotatable threaded element;
b) causing a rotation between said threaded element and said at least one check roller, and
c) detecting, during said step b), the relative position of said abutment means and said at least one check roller.

Such method allows advantages similar to those mentioned above with reference to the apparatus of the invention to be obtained, in particular as far as the possibility of carrying out checks over the entire circumference of a threaded element in limited times.

Preferred characteristics of the method according to the invention are defined in the attached claims 21-26, whose content is herein fully incorporated by reference.

Further characteristics and advantages of the invention will be clearer from the following description of a preferred embodiment thereof, made hereafter for indicating and non-limiting purposes, with reference to the attached drawings. In such drawings:
- Figure 1 is a lateral schematic view, partially in section, of an apparatus for checking the thread of threaded elements according to the invention, in a non-operative configuration;
- Figure 2 is a top schematic view of the apparatus of figure 1;
- Figure 3 is a lateral schematic view, partially in section, of the apparatus of figure 1, in an operative configuration;
- Figure 4 is a top schematic view of the apparatus of figure 1 in the operative configuration shown in figure 3;
- Figure 5 is an enlarged scale schematic view of a detail of a threaded element and of a check roller of the apparatus of figure 1.

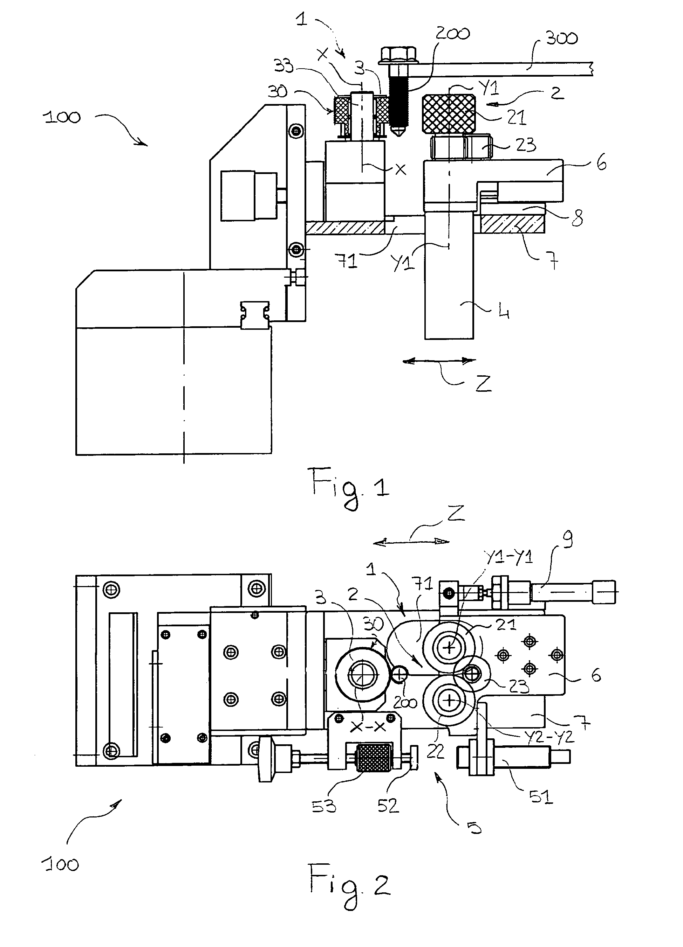

In figures 1-4, an apparatus for checking the thread of threaded elements according to the invention is globally indicated with the reference number 100.

The apparatus 100 comprises a check group 1 adapted to receive a threaded element 200, for example a screw or a stud, for carrying out a check of its thread. The threaded element 200 is sustained, freely rotatable, at the check group 1 by means of a suitable support member 300, only partially illustrated.

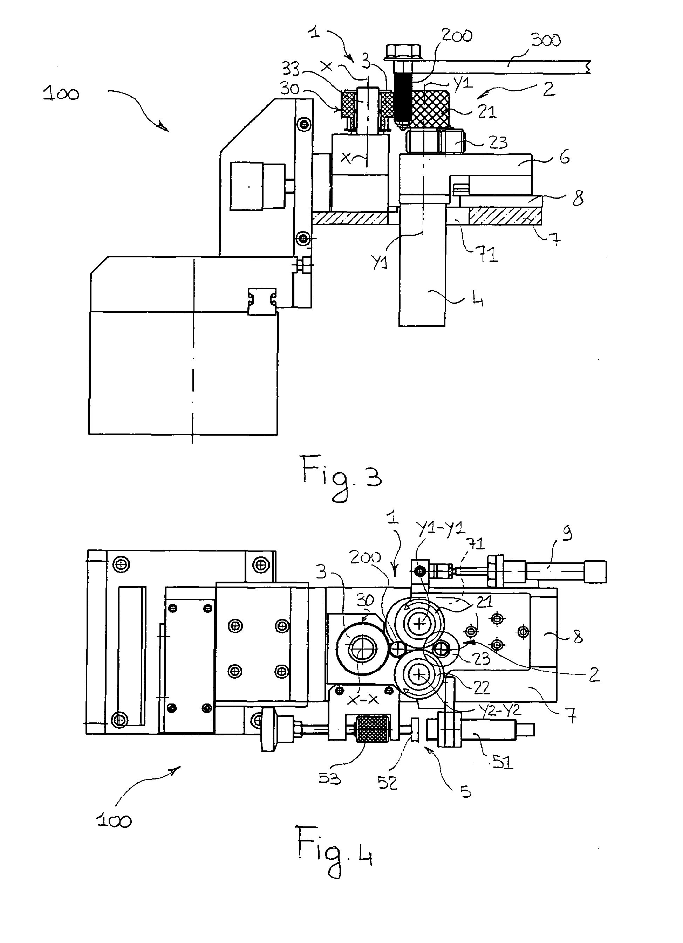

The check group 1 comprises abutment means 2 and a check roller 3, rotatable around a rotation axis X-X and externally threaded with a reference thread 30, selected on the basis of the characteristics of the thread of the threaded element 200 to be checked. The abutment means 2 and the check roller 3 can be positioned relative to each other, as better explained below, for defining an operative configuration of the check group 1 (figures 3 and 4) in which they are in lateral abutment with the threaded element 200. In particular, in the operative configuration of the check group 1, the reference thread 30 of the check roller 3 contacts at least one threaded section of the threaded element 200.

The apparatus 100 further comprises motor means 4 adapted to determine a rotation between the threaded element 200 and the check roller 3 and detection means 5 adapted to detect variations of the relative position between the abutment means 2 and the check roller 3.

Preferably, the abutment means 2 comprise at least one abutment roller 21 having a rotation axis Y1-Y1 substantially parallel to the rotation axis X-X of the 3. Thanks to this feature, it is advantageously possible to prevent sliding between the threaded element 200 and the abutment means 2, when, in the operative configuration of the check group 1, the rotation is caused between the threaded element 200 and the check roller 3.

In the preferred embodiment of the invention illustrated here, a second abutment roller 22 is also employed, having a respective rotation axis Y2-Y2, substantially parallel to the rotation axis X-X of the check roller. In this configuration, the contact surface between threaded element 200 and abutment means 2 is advantageously increased, still avoiding the aforesaid sliding.

Preferably, the check roller 3 is associated with a respective rotation shaft 33 in a removable manner, in order to allow check rollers 3 that differ from each other as to the type of reference thread 30 and/or as to the height to be used.

Preferably, moreover, the check roller 3 is associated with the rotation shaft 33 in an axially movable manner. This makes easier coupling the check roller 3 with the threaded element 200 when they are brought into lateral abutment.

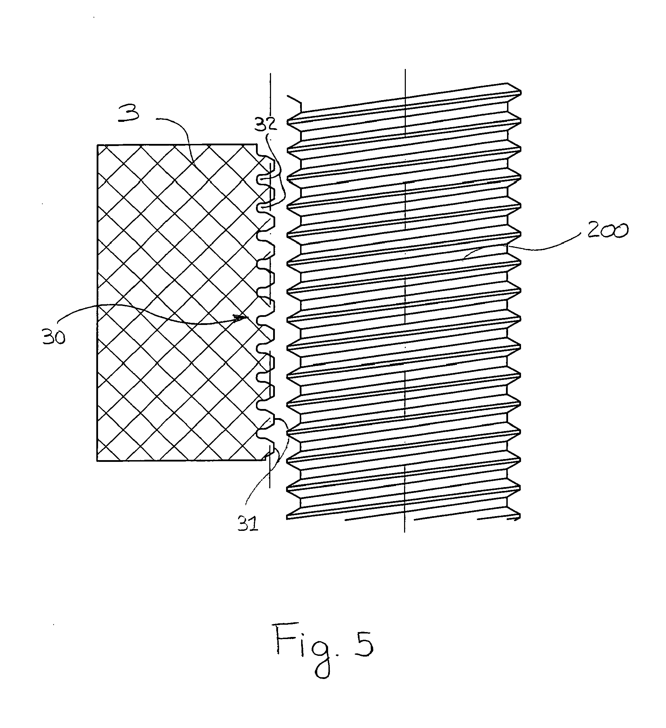

The reference thread 30 can be integrally formed with the check roller 3, as in the embodiment illustrated here (fig. 5), or it can be created on an originally smooth roller, by means of spiral winding of free or fixed calibrated threads.

In any case, the reference thread 30 preferably comprises truncations 31 at the crests and preferably also recesses 32 at the grooves (fig. 5). By means of an appropriate sizing of the truncations 31 and recesses 32, it is possible to determine the sensitivity of the reference thread 30 with respect to defects possibly present in the thread to be checked. In particular, the extent of the truncations 31 at the crests allows defining the tolerance with respect to the possible presence of material in excess in the grooves of the thread: the more the truncation is reduced, the more the control is sensitive. The width of the recesses 32, on the other hand, allows defining the tolerance with respect to possible damages that causes the presence of material in excess at the thread crests: the more the width is reduced, the more the control is sensitive.

The sizing of both the check roller 3 and the abutment rollers 21, 22 must take into account the masses of these components, so that the resulting inertia is compatible with motor means 4 of reasonable size and power for use in the apparatus 100. Moreover, the height of the check roller 3 shall be chosen on the basis of the threaded section height of the threaded element 200 to be checked.

Independently of their specific form, the abutment means 2 and the check roller 3 can preferably be positioned so as to be situated, in the operative configuration of the check group 1, on substantially opposite sides of the threaded element 200 (figures 3 and 4). This ensures both an improved stability of the threaded element 200 during the check operations, and optimal conditions for detecting the presence of defects in the thread by detecting variations of the relative position between the abutment means 2 and the check roller 3, as it is better explained below with reference to the description of a preferred way of carrying out the method of the invention.

The mutual positioning of the abutment means 2 and the check roller 3 for bringing the check group 1 into its operative position is preferably achieved in a simple manner, by moving one or both of the aforesaid components along a predetermined direction, indicated by the double arrow Z in figures 1 and 2, in a plane substantially orthogonal to the rotation axis X-X of the check roller 3.

In the preferred embodiment illustrated here, the check roller 3 has a fixed position, while the abutment means 2 are mounted on a movable carriage 6, which can translate along the direction Z on a suitable plate 7 substantially perpendicular to the rotation axis X-X of the check roller 3. The translation of the movable carriage 6 is preferably guided by means of a rail system 8 of conventional type. The movement of the movable carriage 2 is controlled by means of conventional actuator means 9, such as for example electric, electromagnetic, pneumatic or hydraulic actuators. By means of the actuator means 9, the thrust of the abutment elements against the threaded element 200 and the check roller 3 is also regulated.

The motor means 4 are of conventional type and can be selected, for example, among DC motors, AC motors, stepping motors, brushless motors and pneumatic motors.

In the preferred embodiment illustrated here, the motor means 4 are active on one of the two abutment rollers 21 and 22, for example the abutment roller 21. In this case, transmission means 23, operatively interposed between the abutment roller 21 and the abutment roller 22 can be further provided for directly transmitting the torque also to the latter.

If the motor means 4 are associated with the components mounted on the movable carriage 6, as in the illustrated embodiment, a suitably sized opening 71 can be provided in the plate 7 for preventing interferences between the motor means 4 and the plate 7 during the movement of the movable carriage 6.

In the preferred embodiment illustrated here, the detection means 5 are adapted to detect the distance between the abutment means 2 and the check roller 3 along the direction Z. The detection means 5 can comprise any known analog or digital system for detecting linear distances in a direct or indirect manner. Preferred systems, by virtue of their characteristics of precision, reliability and compactness, are for example comparators, laser telemeters, capacitive transducers, linear transducers and optical scales.

In the illustrated embodiment (figures 2 and 4), the detection means 5 consists for example of a laser telemeter comprising a laser source 51 associated with the movable carriage 6, and a fixed reflector element associated with the same structure supporting the check roller 3.

Preferably, the position of the reflector element 52 along the direction Z is adjustable, for example by means of a screw system 53. This allows calibrating the laser telemeter so to maintain an optimal measurement distance between the laser source 51 and reflector element 52 in the operative configuration of the check group 1 when threaded elements with different diameters are checked.

The apparatus 100 further comprises a control unit (not shown in the figures) adapted to receive a input signal from the detection means 5, indicative of the distance along the direction Z between the check roller 3 and the abutment means 2, and to return, on the basis of such input signal, an output signal for accepting or rejecting a checked threaded element 200.

In alternative embodiments of the apparatus 100, not shown, more than one check roller 3 can be employed. This advantageously allows limiting the amount of rotation of the threaded element 200 necessary for completing a check of the entire circumference, and consequently increasing the control speed. For example, with two check rollers 3, it will be enough to have rotation of 180° rather than 360°, as it is instead necessary when using just one check roller 3.

Further variants of the preferred embodiment described above can comprise, as an example: abutment means 2 that cannot be rotated, for example in the form of a suitably sized concave surface; the movement of the check roller 3 instead of or in addition to that of the abutment means 2; the action of the motor means 4 on the check roller 3 instead of on one of the abutment rollers 21, 22.

With reference to figures 1-4, a preferred embodiment of the method according to the invention will now be described, that can be carried out by means of the apparatus 100 described above.

Figures 1 and 2 show the apparatus 100 with the check group 1 in a non-operative configuration, in which the abutment means 2 and the check roller 3 are mutually positioned so as to be able to receive a threaded element 200 to be checked in the space between them.

In a first step of the method, the abutment means 2 and the check roller 3 are brought into lateral abutment with the threaded element 200, previously positioned at the check group 1.

The first step is preferably carried out by moving the abutment means 2 and/or the check roller 3 along a predetermined direction Z in a plane substantially perpendicular to the rotation axis X-X of the check roller 3. In particular, referring to the preferred embodiment of the apparatus 1 described above, the check roller 3 is fixed and the abutment means 2 are moved.

At the end of this step, the check group is in its operative configuration (figures 3 and 4). In such operative configuration, the abutment means 2 and the check roller 3 are in lateral abutment with the threaded element 200, at a distance along the direction Z depending on the diameters of the threaded element 200, and possibly on the presence of defects in its thread. Such defects can cause the coupling between the reference thread 30 of the check roller 3 and the thread of the threaded element 200 to occur in an imperfect manner or even, in extreme cases, to be not possible.

In the operative configuration, moreover, the abutment means 2 and the check roller 3 are maintained in lateral abutment with the threaded element 200 with a predetermined thrust. In the preferred embodiment of the above-described apparatus 100, such thrust is produced by means of the actuator means 9 of the movable carriage 6.

In a subsequent step of the method, a rotation is caused between the threaded element 200 and the check roller 3. Referring to the preferred embodiment of the apparatus 100 described above, in which the abutment means 2 consist of the abutment rollers 21, 22, such step is preferably carried out by placing the abutment roller 21 in rotation by means of the motor means 4 associated thereto. The rotation of the abutment roller 21 is preferably transmitted also to the abutment roller 22 by means of the transmission means 23. The rotation of the abutment rollers 21, 22 is then transmitted to the threaded element 200 and to the check roller 3 via the contact between these elements in the operative configuration of the check group 1 (figure 4). Of course, given the same principle of transmitting rotation by contact, the motorised element of the kinematic chain can also be the abutment roller 22 or the check roller 3, or even a component of the transmission means 23, if they are present, according to the specific embodiment of the apparatus 100.

The rotation step is preferably carried out in a manner such to allow a check over the entire circumference of the threaded element 200. In particular, if only one check roller 3 is employed, the rotation step will have to ensure a rotation of the threaded element 200 of at least 360°. If instead more check rollers 3 are used, the amount of the threaded element 200 rotation can also be less than 360°, to an extent inversely proportional with the number of rollers employed.

The method of the invention further comprises a step of detecting the relative position between the abutment means 2 and the check roller 3. Referring to the preferred embodiment of the apparatus 100 described above, such step is preferably carried out by detecting the distance between the abutment means 2 and the check roller 3 along the movement direction Z of the movable carriage 6 on which the abutment rollers 21, 22 are mounted.

The detection of a distance within a predetermined tolerance interval about a reference distance is an indication of the presence of defects in the thread of the checked threaded element 200. The selection of the reference distance and of the tolerance interval range determines the system sensitivity to the size of the detected defects.

Preferably, the method of the invention further comprises a step of generating an acceptance signal of the checked threaded element 200, if the detected distance is found to be within the aforesaid predetermined tolerance interval, or of generating a rejection signal of the checked threaded element 200 if the detected distance is found to be outside such tolerance interval.

## Claims

1. Apparatus (100) for checking the thread of a threaded element comprising:
- a check group (1) adapted to receive a freely rotatable threaded element (200), said check group (1) comprising abutment means (2) and at least one check roller (3) rotatable about a rotation axis (X-X) and externally threaded with a reference thread (30), said abutment means (2) and said at least one check roller (3) being positionable relative to each other for defining an operative configuration of said check group (1), in which said abutment means (2) and said at least one check roller (3) are in lateral abutment with said threaded element (200);
- motor means (4) adapted to cause a rotation between said threaded element (200) and said at least one check roller (3), and
- detection means (5) adapted to detect the relative position of said abutment means (2) and said at least one check roller (3).

2. Apparatus (100) according to claim 1, wherein said abutment means (2) comprise at least one abutment roller (21) having a rotation axis (Y1-Y1) substantially parallel to the rotation axis (X-X) of said at least one check roller (3).

3. Apparatus (100) according to claim 1, wherein said abutment means (2) comprise two abutment rollers (21,22) having respective rotation axis (Y1-Y1,Y2-Y2) substantially parallel to the rotation axis (X-X) of said at least one check roller (3).

4. Apparatus (100) according to any one of the previous claims, wherein said abutment means (2) and said at least one check roller (3) can be positioned so as to be situated, in said operative configuration, on substantially opposite sides of said threaded element (200).

5. Apparatus (100) according to any one of the previous claims, wherein said abutment means (2) and/or said at least one check roller (3) are movable along a predetermined direction (Z) in a plane substantially orthogonal to the rotation axis (X-X) of said at least one check roller (3).

6. Apparatus (100) according to claim 5, wherein said detection means (5) are adapted to detect the distance between said abutment means (2) and said at least one check roller (3) along said predetermined direction (Z).

7. Apparatus (100) according to claim 5 or 6, wherein said at least one check roller (3) has a fixed position and said abutment means (2) are mounted on a movable carriage (6) capable of translating along said predetermined direction (Z).

8. Apparatus (100) according to claim 5 or 6, wherein said abutment means (2) have a fixed position and said at least one check roller (3) is mounted on a movable carriage (6) capable of translating along said predetermined direction (Z).

9. Apparatus (100) according to any one of the claims 2-8, wherein said motor means (4) are active on said at least one abutment roller (21).

10. Apparatus (100) according to any one of the claims 1-8, wherein said motor means (4) are active on said at least one check roller (3).

11. Apparatus (100) according to any one of the claims 1-8, wherein said motor means (4) are active on said threaded element (200).

12. Apparatus (100) according to any one of the previous claims, wherein said check roller (3) is removably associated with a respective rotation shaft (33).

13. Apparatus (100) according to claim 12, wherein said check roller (3) is associated with the respective rotation shaft (33) in an axially movable manner.

14. Apparatus (100) according to any one of the previous claims, wherein said reference thread (30) is integrally formed on said check roller (3).

15. Apparatus (100) according to any one of the claims 1-13, wherein said reference thread (30) is formed on said check roller (3) by means of spiral winding of calibrated wires.

16. Apparatus (100) according to any one of the previous claims, wherein said reference thread (30) comprises truncations (31) at the crests.

17. Apparatus (100) according to any one of the previous claims, wherein said reference thread comprises recesses (32) at the grooves.

18. Apparatus (100) according to any one of the previous claims, wherein said detection means (5) are selected from the group comprising: comparators, laser telemeters, capacitive transducers, linear transducers, optical scales.

19. Apparatus (100) according to any one of the previous claims, further comprising a control unit adapted to receive an input signal from said detection means (5) and to return an output signal of acceptance or rejection of the checked threaded element (200).

20. Method for checking the thread of a threaded element comprising the steps of:
a) bringing abutment means (2) and at least one check roller (3) rotatable about a respective rotation axis (X-X) and externally threaded with a reference thread into lateral abutment with a freely rotatable threaded element (200);
b) causing a rotation between said threaded element (200) and said at least one check roller (3);
c) detecting, during said step b), the relative position of said abutment means (2) and said at least one check roller (3).

21. Method according to claim 20, wherein said step a) comprises moving said abutment means (2) and/or said at least one check roller (3) along a predetermined direction (Z) in a plane substantially orthogonal to the rotation axis (X-X) of said at least one check roller (3).

22. Method according to claim 21, wherein said step c) comprises detecting the distance between said abutment means (2) and said at least one check roller (3) along said predetermined direction (Z).

23. Method according to any one of the claims 20-22, wherein said abutment means (2) comprise at least one abutment roller (21) and said step b) comprises rotating said at least one abutment roller (21).

24. Method according to any one of the claims 20-22, wherein said step b) comprises rotating said at least one check roller (3).

25. Method according to any one of the claims 20-22, wherein said step b) comprises rotating said threaded element (200).

26. Method according to any one of the claims 20-25, further comprising the step of:
d1) generating an acceptance signal of said threaded element (200) if the distance detected in said step c) is found to be within a predetermined tolerance interval about a reference distance, or
d2) generating a rejection signal of said threaded element (200) if the distance detected in said step c) is found to be outside said tolerance interval.
